# EUROPEAN PATENT APPLICATION

(11) **EP 1 754 435 A1**
(43) Date of publication of application: **21.02.2007**
(21) Application number: 06254329.3
(22) Date of filing: 17.08.2006
(51) Int. Cl.: A47J 27/21, A47J 36/04

(54) **Electric liquid heaters**

(30) Priority: 18.08.2005 GB 0516948
(71) Applicant: STRIX LIMITED, Ronaldsway, Isle of Man IM9 2RG (GB)
(72) Inventor: Scott, Michael James, Onchan, Isle of Man, IM3 2AU (GB); Felmeri, Ian, Castletown, Isle of Man , IM) 1IBD (GB)
(74) Representative: Samuels, Adrian James

(57) **Abstract**

An electric liquid heater (1) comprises a liquid facing surface (6) having thereon first and second discrete zones, the first zone (8) comprising a discontinuous hydrophobic coating and the second zone (12) being substantially free of the coating. The first zone (8) may comprise an annulus on the liquid facing surface extending around the periphery of the heated portion of the heater surface. A portion of the second zone (10) of the liquid facing surface may be directly above a thermal sensor (14) associated with the heater.

## Description

This invention relates to electric liquid heaters and to vessels incorporating such heaters, which are adapted to reduce the amount of noise generated during heating.

Over recent years, the demand for shorter heating times in kettles and jugs has led to an increase in the power of a typical heater from around 2.2 kW to around 3 kW. This power increase has been achieved without increasing the size of the heater so that the appliance does not need to be made larger to accommodate a larger heater. Thus the increase in heating power has lead to an increase in the power density applied to the heater's surface. This has, in turn, modified the process of heat transfer between the heater and the liquid being heated.

The change in the heating process has resulted in an increase in the noise generated by kettles and jugs during heating. This noise is generally considered undesirable.

In GB-A-2386532 the Applicant set out details of various coatings that can be applied to the water-facing surface of an electric water heater in order to reduce the incidence of local nucleate boiling and thus reduce the amount of noise generated. These multiphase coatings generally comprise additive particles which provide nucleation sites for bubbles and a matrix acting to disrupt the growth of bubbles. However, the additive particles incorporated in the coating can in some circumstances also act as nucleation sites for the formation of scale. The presence of scale on a heater surface results in an undesirable appearance and also causes the running temperature of the heater to rise, which can lead to premature operation of a thermally sensitive control for the heater. This is known as dry boil interference. Moreover the presence of scale on a heater surface results in increased noise levels.

It has been suggested that the problem of scale adhesion may be alleviated by adding a hydrophobic material such as PTFE to the coating. However, the incorporation of such additives tends to promote film boiling at the heater surface in use. Film boiling is undesirable since the resultant layer of air/steam reduces heat transfer from the heater to the water and therefore makes the heater tend to overheat; and it makes thermal sensors in contact with the heater relatively more sensitive to the element temperature than to the liquid temperature and hence there will be a tendency for premature operation of the control, for example switching off a kettle before the water has reached boiling point.

It is an aim of the present invention to provide an improved heater which generates a reduced amount of noise in use.

When viewed from a first aspect the present invention provides an electric liquid heater comprising a liquid facing surface having thereon first and second discrete zones, said first zone comprising a discontinuous hydrophobic coating and said second zone being substantially free of said coating.

Thus it will be seen by those skilled in the art that in accordance with the present invention there is provided in a first zone of the heater surface a discontinuous hydrophobic coating which will effectively provide adjacent regions with different surface tension properties. The hydrophobic coating inhibits wetting and therefore allows the formation of vapour bubbles on the heater surface, but the growth of the bubbles is limited because the coating does not extend continuously on the surface. The discontinuous coating therefore promotes the formation of bubbles but prevents them from growing too large so that bubbles of a smaller average size are produced. The reduced size of the bubbles released from the heater surface tends to result in lower noise levels being generated. The Applicant has realised that this effect can be achieved by having just a single phase hydrophobic coating on the surface, unlike in the previously proposed noise reduction treatment where a multiphase coating or more than one type of coating was suggested. The invention therefore allows the production of effective noise reduction coatings more easily and cost effectively.

A further advantage of heaters made in accordance with the invention is that the maximum size of the bubbles and the frequency of their detachment from the heater surface can be controlled to some extent by the dimensions of the discontinuous coating. This can therefore be tailored to reduce the extent of bubbles coalescing and the resultant vapour blanketing of film boiling.

Arrangements in accordance with the invention can reduce the incidence of large-scale film boiling since any vapour blanket formed on a patch of hydrophobic coating in the first zone will be curtailed by the discontinuous nature of the coating in that zone, or by the boundary between the first zone and the second zone which is substantially free of the hydrophobic coating. The possible overheating effect of film boiling which does occur will be limited since heat is still conducted laterally as long as the continuous portions of the first zone are not too large.

In preferred embodiments the hydrophobic coating in the first zone can inhibit the adhesion of scale without the need for additional scale shedding additives. The cost of the coating can therefore be minimised. The provision of a hydrophobic coating only in a first zone of the heater, a second zone being substantially free of the coating, itself allows a material cost saving to be achieved.

In accordance with the invention the discontinuous nature of the hydrophobic coating means that there will be gaps between the areas in which the coating is present. The aforementioned second zone is of course also free of the coating. These areas in which the hydrophobic coating is not present could be substantially free of any coating or surface treatment. In other words they could simply consist of exposed metal. This would minimise material cost.

Alternatively a different form of surface treatment or coating could be provided on these areas. For example in some preferred embodiments a coating discouraging the adhesion of scale is provided in these areas. This can improve the appearance of the heater and reduce the likelihood of the heater overheating due to scale on its surface. Such a coating might prevent corrosion as well or instead.

The second, different, surface treatment or coating will be less hydrophobic than the discontinuous hydrophobic coating. It may have a completely different material composition to the discontinuous hydrophobic coating. However it is also envisaged that it could comprise the same basic hydrophobic coating material, but with a different amount of additive, or with a different additive. Alternatively the second, less hydrophobic coating might comprise the same basic hydrophobic coating material but with a filler to reduce its hydrophobicity. In another alternative the second coating could simply comprise less of the hydrophobic constituent such as silicon.

The second, different, coating may be applied in a layer on the heater surface before the main hydrophobic coating is applied so that it remains exposed in those areas where the hydrophobic coating is not present. Alternatively the second coating may be applied at the same time as the main coating or afterwards. It will be appreciated of course that the areas which do not have the hydrophobic coating - i.e. the gaps and the second zone - need not have the same coating or treatment as each other or even over their whole individual extent.

The first zone, comprising a discontinuous hydrophobic coating, may have any convenient shape. Preferably the first zone corresponds generally to the the extent of the heating element. This optimises the degree of noise reduction since noise is generated predominantly directly above the element. For example the first zone might cover the majority of the surface of the heater where the element comprises a thick film resistive heating track. Alternatively where a sheathed heating element is mounted to or formed on the underside of the heater plate, the first zone preferably has the shape of a full or partial annulus to correspond to the arcuate shape of a standard sheathed element. In some preferred embodiments the first zone comprises an annulus on the liquid facing surface extending around the periphery of the heated portion of the heater surface, preferably comprising about one third of the heater surface. This has been found to provide a sufficient degree of noise reduction by covering the most heated part of the surface while still limiting the amount of coating used.

The second zone which is substantially free of the hydrophobic coating may also have any convenient shape. It is preferred that at least a portion of the second zone of the liquid facing surface is directly above a thermal sensor associated with the heater. This means that the tendency for dry boil interference which can arise when a hydrophobic coating is applied will be significantly reduced since the heater surface above the thermal sensor is less prone to film boiling than it would otherwise have been. In some preferred embodiments the second zone comprises a circular or annular region of the heater. The circular or annular region is advantageously positioned to coincide with that part of the heater surface which is directly above one or more thermal sensors in use.

In preferred embodiments the coating comprises an array of spaced apart regions so that bubbles are kept spaced apart and prevented from coalescing into a vapour blanket so that the likelihood of film boiling and dry boil interference with thermal sensors is reduced. The array may comprise regions that are spaced apart in a radial and/or circumferential direction of the heater. The array may comprise regions of any shape, such as triangles, arcuate segments, polyhedral shapes. In some possible embodiments the coating comprises an array of generally circular regions, i.e. dots on the surface. In other, preferred embodiments the coating comprises an array of radially extending strips.

Regardless of the shape and form of the array, the size of the regions preferably determines the size of bubbles formed on the coating. Preferably the size of regions of the array is such that bubbles formed on the coating are limited to a size of 10 mm or less, further preferably to a size of 1-3 mm.

In some preferred embodiments the liquid facing surface of the heater has a third discrete zone comprising a continuous hydrophobic coating. Such a third zone is advantageously scale repellent and in some preferred embodiments, therefore, the third zone is on a part of the surface at the centre of the heater which allows it to improve the visual appearance of the heater without unduly reducing the noise reduction effect provided by the first zone and without interfering with the operation of a thermal control for the heater.

In accordance with the invention described thus far, a coating may be applied to certain parts of a heater surface to reduce noise whilst minimising disruption to the efficient ordinary operation of the heater. The liquid-facing surfaces of underfloor heaters, or at least the heated portions thereof are typically substantially planar. Indeed it will be appreciated that a planar surface will facilitate the application of a coating thereto. However, the Applicants have appreciated that in some circumstances it may be beneficial for the underlying surface to be non-planar.

Specifically according to a further set of preferred embodiments a hydrophobic coating is provided on a rising portion of the heater surface. This could be realised by the first zone, comprising a discontinuous hydrophobic coating, including a rising portion of the surface. Alternatively the surface may have a rising portion outside either of the first and second zones with a continuous or discontinuous hydrophobic coating provided thereon. In any case the provision of a hydrophobic coating on a rising portion, whether continuous or discontinuous, is advantageous as the detachment of bubbles can be enhanced. It has been appreciated that it is beneficial to encourage detachment of bubbles from a heater surface as this prevents the bubbles from growing too much in size and/or coalescing with other bubbles on the surface to form a vapour blanket which locally insulates the heater and can cause overheating. If the detaching bubbles are relatively small then the noise generated will not be too great.

This feature is novel and inventive in its own right and thus when viewed from a second aspect the present invention provides an electric liquid heater having a profile including a rising portion, wherein said rising portion has a hydrophobic coating on its surface and wherein elsewhere on the surface of the heater there is provided a non-uniform noise reduction coating.

It has been appreciated that bubbles will be attracted to regions on the heater surface which are less wetted due to the presence of a hydrophobic coating. Vapour bubbles on the heater surface would normally tend to remain static or be moved by the currents in the liquid until rising up through the liquid column when they have grown sufficiently that their lower density overcomes the surface tension at the surface. By providing a hydrophobic coating on a rising portion of the heater however, bubbles will tend to migrate along the rising surface, in their natural buoyancy direction, to the top of the rising portion from where they will more readily detach. Indeed it has been found that the rising portion can encourage convection currents to develop which enhance this migration.

In arrangements according to this aspect of the invention the non-uniform noise reduction coating may be any coating which limits the growth of bubbles. For example it could be a discontinuous hydrophobic coating, such as one formed in an array of spots or stripes. It may extend across all of the rest of the heater surface or alternatively and preferably the non-uniform coating could comprise first and second discrete zones as previously described. The noise reduction coating may even be non-uniform by virtue of being a two-phase coating, for example as described in GB-A-2386532.

In any of these arrangements the hydrophobic coating on the surface of the rising portion may be continuous or discontinuous.

The rising portion may be formed by any change in the gradient or level of the heater surface. In one preferred example it is formed by a peripheral portion of the heater surface adjoining the radially inner wall of a peripheral channel, preferably by means of which the heater is fitted into a liquid heating vessel in accordance with the Applicant's Sure Seal system as described in WO 96/18331. In another preferred example the rising portion is provided by a surface of the heater being formed over a sheathed element mounted to or formed on its underside. This is particularly advantageous as it gives the benefit of preferential bubble detachment precisely where most bubbles are generated. In certain embodiments it is envisaged that the rising portion is provided with a lip to enhance the detachment of bubbles.

The rising portion may comprise any kind of slope or step in the heater surface and could even be substantially vertical.

As a result of the heater having a non-uniform coating, the growth of bubbles and the occurrence of film boiling can be limited as explained above. In preferred embodiments the heater has a hydrophobic coating at least on a part of its surface extending to the rising portion. The hydrophobic coating may be continuous or discontinuous in this part. In either case, the coating will act to attract bubbles preferentially towards the rising portion, from where they will detach.

Preferably the heater has a hydrophobic coating formed on its surface in a pattern such that, in use, bubbles are encouraged to form on and migrate along the pattern to the rising portion. The pattern can therefore be used to constrain the movement of the bubbles. This allows bubbles to migrate to parts of the surface from which they more readily detach.

The Applicant has appreciated that any local increase in the level of the heater surface is advantageous for promoting the detachment of bubbles; and further that this may arise from a change in the profile of the heater surface *per se* (as described hereinabove) or from a change in the profile of a coating applied to the heater surface. In a further set of preferred embodiments therefore the hydrophobic coating described with respect to either of the aforesaid first or second aspects of the invention has a thickness profile encouraging the preferential detachment of bubbles formed thereon at predetermined parts of the profile. In other words, higher portions may be defined by varying the thickness of the coating itself. This feature is novel and inventive in its own right and thus when viewed from a third aspect the present invention provides an electric liquid heater comprising a hydrophobic coating applied to its liquid facing surface with a thickness profile encouraging the preferential detachment of bubbles formed thereon at predetermined parts of the profile.

The profiling of a hydrophobic coating to encourage the detachment of bubbles can enhance the noise reduction effect of the coating as the bubbles are encouraged to detach before they grow too large. Detachment of bubbles can also reduce the tendency for film boiling.

A profiled hydrophobic coating need not necessarily be applied discontinuously on the heater surface as the changes in surface tension provided by the thickness profile may be sufficient to interrupt bubble growth. This arrangement can therefore provide an alternative way of achieving noise reduction with a single phase hydrophobic coating. In preferred embodiments, however, the profiled hydrophobic coating is provided discontinuously preferably only in a first zone on the heater surface with a second zone free of the coating as previously described. With such arrangements both the growth and detachment of bubbles from the heater surface can be optimally controlled.

To encourage the preferential detachment of bubbles formed on the surface at predetermined parts of the coating's height profile, the coating may be rippled, textured, heaped, dimpled or otherwise shaped in any suitable way. Preferably the coating has a domed or peaked transverse sectional profile. This will be particularly effective in promoting detachment if the coating is formed in a pattern of radial spokes as previously described and thus has a ridged profile along the length of the spokes.

The Applicant has further realised that the heat flux through the heater will be affected where a hydrophobic coating is provided on the surface. This may be used preferentially to heat selected zones of the liquid column above the heater. Alternatively the coating may be used to create and control local convection currents in the liquid being heated. A profiled hydrophobic coating can be advantageously used to affect these convection currents so that they help to control the movement of bubbles on the heater surface and to promote the detachment of bubbles from the surface. From a further broad aspect therefore the present invention provides an electric liquid heater comprising a hydrophobic coating pattern applied to its liquid facing surface for generating, in use, convection currents in the liquid enhancing the detachment of bubbles formed thereon.

As previously mentioned such convection currents can cause the bubbles preferentially to follow the profiled shape of a patch of so that the current guides the bubbles along the patch of coating. This can be particularly effective where the patch of coating is on a rising portion of the heater as in accordance with earlier aspects of the invention, such that the convection currents flow up the rising portion and carry bubbles with them to the top of the rising portion from where they will more readily detach. Where bubbles are being carried along by convection currents it has been observed that they can pick up and absorb other bubbles along the way in a snowballing fashion. The convection currents can therefore act to effectively sweep the heater surface clean of bubbles.

The coating pattern could also be designed to encourage bubbles to move towards and detach from particular parts of the pattern to produce a corresponding pattern of bubbles on the surface and detaching into the liquid which has a visually attractive shape.

There will now be described various preferred features of a hydrophobic coating in accordance with all of the foregoing aspects of the present invention.

Any suitable kind of hydrophobic coating may be used. Preferably the coating has a water contact angle between 80° and 170°, preferably above 100°. This reduces the wetting of the coated surface so that bubbles can form. It is preferable that the coating is non-stick, for example PTFE (e.g. Teflon®). It also preferable that the coating has good scale shedding properties, such as Greblon®. Preferred coatings are silicon based. A coating which has been found to be suitable is X10106 produced by Akzo Nobel. Silicon based coatings are favoured because it has been found that PTFE-based coatings are less suitable for heaters which could undergo cycling under dry switch-on conditions, as opposed to those with a latching overheat mechanism, because the high temperature rise seen on the surface above the element during dry switch-on causes the coating to degrade. Preferably the coating is able to withstand temperatures up to 400 °C without degrading.

It is preferable that the coating comprises a pure silicon resin rather than containing amounts of Si oil (as is common in non-stick bakeware coatings) as it has been found that the presence of Si oil can result in film boiling.

The coating may be applied to the heater surface by any suitable method, for example spraying, dipping, printing, roller or curtain coating.

In some embodiments the hydrophobic coating may comprise an additive. Many different additives can be used for a number of purposes including: to increase the heat stability of the coating; to roughen the surface and provide nucleation sites for bubbles; and to alter the surface tension properties of the coating. The hydrophobicity of the coating can be tuned by adding amounts of hydrophobic or hydrophilic materials, such that the contact angle and resulting bubble size can be controlled. Examples of suitable additives include mica, glass beads, glass flake, stainless steel flake, silicon carbide, aluminium, talc and silica or silica gel. It has been found that a particularly suitable additive for silicon-based coatings is Aeroxide® LE hydrophobic silica as it gives a microscopic surface texture which mimics the surface texture of the leaves of a lotus flower in order to give a similar self-cleaning effect to the coated surface. The additive may be in the form of a powder which is mixed into the coating material before it is applied, or preferably the coating material is sprayed onto the surface and the additive powder is added on top of the wet coating after spraying.

The invention extends to an electric liquid heater comprising a coating applied to its liquid facing surface, the coating comprising a physical surface structure which substantially prevents wetting thereof by water or water containing detergents.

Preferably said surface structure includes elevations comprising hydrophobic polymers or permanently hydrophobized materials. Most preferably the elevations are spaced by between 5 and 200 microns. Preferably the elevations have a height in the range of 5 to 100 microns.

The invention extends to a method of applying a hydrophobic coating to an electric water heater so as to reduce the levels of noise generated during heating comprising applying said hydrophobic coating discontinuously on a first zone of the heater surface and maintaining a second zone of the heater surface substantially free of said coating.

The invention extends to a water heating vessel, preferably a water boiling vessel, incorporating any of the heaters described hereinabove.

Whilst the invention has been described in some aspects with respect to heaters having mostly planar surfaces, it should be understood that the liquid facing heater surface described above is intended not only to cover generally flat surfaces but also surfaces which are curved, stepped or otherwise profiled even such that they can no longer be considered approximately planar.

Some preferred embodiments of the invention will now be described, by way of example only, with reference to the accompanying drawings in which:
Fig. 1 is a perspective view of a water heater in accordance with an embodiment of the invention;
Fig. 2 is a plan view of the heater of Fig. 1;
Fig. 3 is a perspective view of another embodiment of the invention with the coating extending over a peripheral wall of the heater;
Fig. 4 is a plan view of the heater of Fig. 3;
Fig. 5 is a perspective view of a further embodiment of the invention with the coating in an array of circular regions;
Fig. 6 is a plan view of the heater of Fig. 5;
Fig. 7 is a sectional view of a heater in accordance with the embodiments of Figs. 1 and 2; and
Fig. 8 is a schematic drawing (not to scale) of a profiled hydrophobic coating stripe.

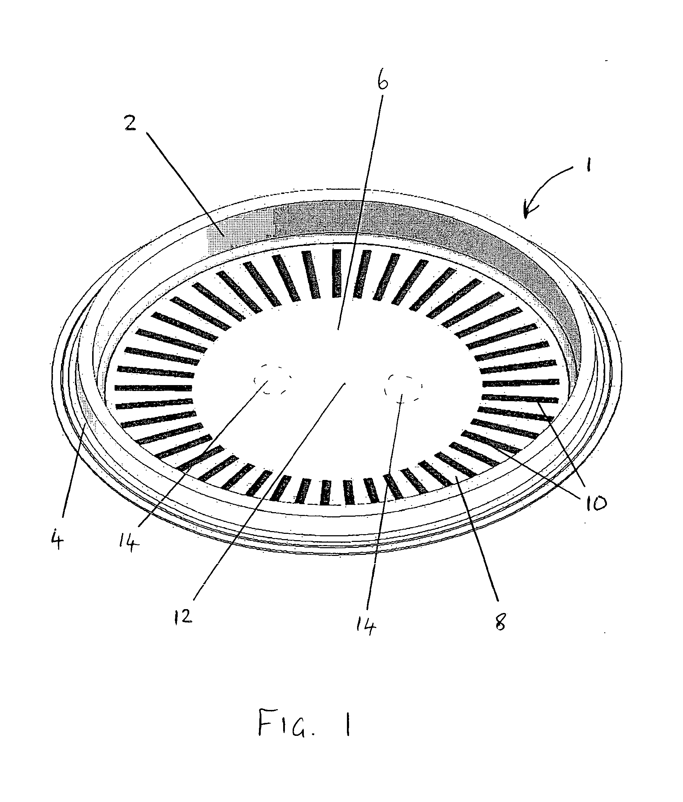

Figures 1, 2 and 7 show a first embodiment of the invention in the form of an underfloor heater 1 for closing an opening in the base of a liquid heating vessel. The heater comprises the Applicant's standard-form Sure Seal stainless steel base plate 2 which is circular and provided with a peripheral channel 4 to allow it to be clamped to the lower edge of a vessel wall as is described in greater detail in WO 96/18331. Mounted on the underside of the base plate 2 is a sheathed electrical heating element 5. A heat diffusion member may also be brazed to the underside of the plate 2, as is well known in the art.

The upper liquid-facing surface 6 of the heater plate 2 has thereon a generally annular zone 8 in which there is provided a discontinuous hydrophobic coating in the form of a regular array of radially extending, spaced-apart stripes 10 of X10106 coating available from Akzo-Nobel. The stripes are a few mm wide, e.g. between 1 and 3 mm.

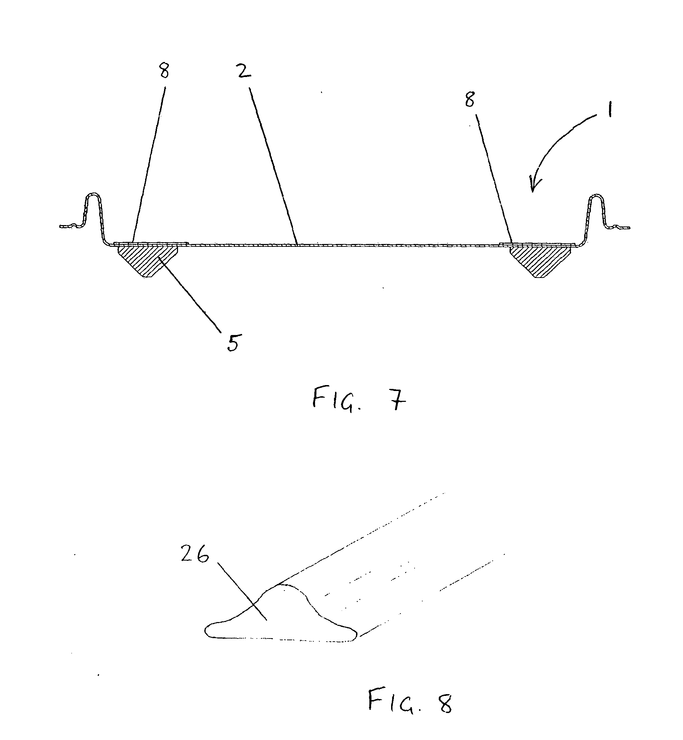

It will be seen from the sectional view in Figure 7 that the coating zone 8 overlies the heating element sheath 5. The thickness of the coating shown in this Figure is exaggerated for clarity purposes. In practice where provided the coating is less than 100 microns thick e.g. of the order of 10 microns. Between the stripes no coating is present but another, less hydrophobic coating could be provided there.

In the centre of the plate 2 there is a generally circular zone 12 on the surface which is also free of any coating but again a less hydrophobic coating could be applied. As shown by the dashed outlines 14, the two bimetallic actuators of one of the Applicant's U17 or U18 series of controls are located in use beneath the uncoated zone 12.

In use of the heater, heat from the element 5 will be transferred to the liquid predominantly by means of a direct path through the heater plate 2. As the water is heated bubbles will tend to form on the heater surface. The hydrophobic nature of the stripes 10 means that the bubbles tend to form there rather than in the gaps between the stripes or the central zone 12. As heating continues the formed bubbles tend to grow in size. However when they reach the edge of the stripes 10, the discontinuity in surface tension tends to cause further growth to be checked and instead the bubbles are encouraged to detach from the plate and rise to the top. Thus even if the element 5 is of a modern high powered variety such as with a rating of 3 kW, the discontinuous coating restricts the size to which bubbles grow during nucleate boiling and therefore the noise which is generated.

Since there is a much shorter thermal path directly through the heater plate 2 than one involving the lateral conduction of heat, heat transfer from the central zone 12 to the liquid will be relatively low and thus no significant noise will be generated by such transfer.

Since the coating is hydrophobic there will be some tendency at higher temperatures for bubbles to coalesce and so for film boiling across the coating to take place. Indeed it has been observed that as convection currents in the water carry bubbles along the stripes 10, larger bubbles tend to subsume smaller ones and consequently expand much like the growth of a rolling snowball. However, the relatively small width of the coating stripes 10 in the array tends to minimise mitigate film boiling. Even if a vapour blanket did form along the length of a coating stripe 10, the effect is limited by limited size of the stripe. For example, there is sufficient lateral transfer of heat in the circumferential direction to prevent any significant local overheating at the stripes. Moreover, since there is no coating at all above the thermal sensors, film boiling there and the attendant problem of dry boil interference is unlikely.

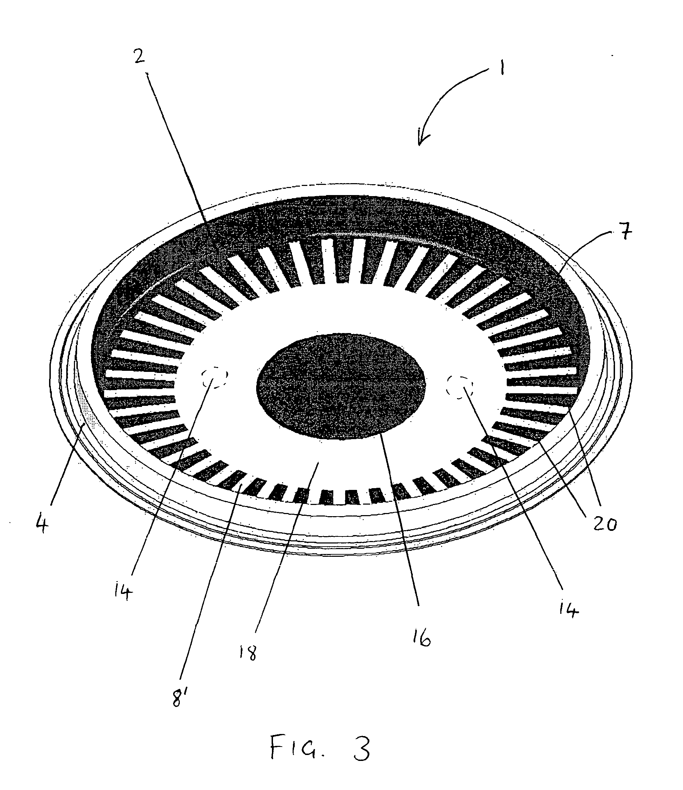

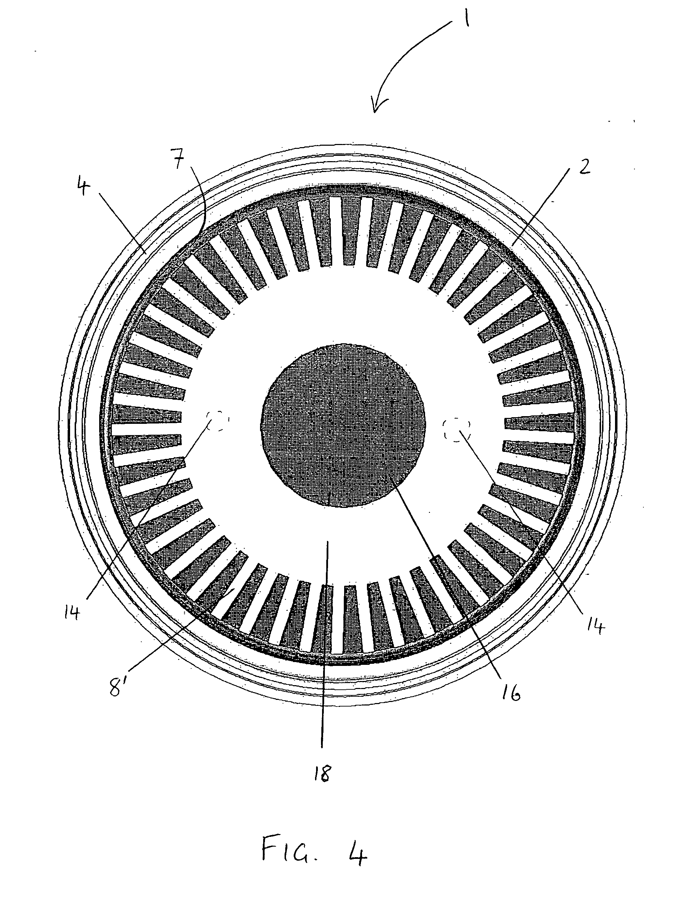

The embodiment shown in Figures 3 and 4 is similar to the first embodiment except that the heater plate 2 has the hydrophobic coating applied in a different pattern. At the centre of the liquid facing surface 6 is a solid disc 16 of the hydrophobic coating. In addition to embellishing the surface so as to improve the visual appearance of the heater plate 2, the coating is scale resistant and therefore prevents the formation of unsightly scale on the central part of the heater. However this central disc need not be the same as that which is applied in the first annular zone 8'. It could for example have a reduced hydrophobicity.

The central disc 16 defines an annular zone 18 surrounding it which is free of the hydrophobic coating. As shown by the dashed outlines 14, the two bimetallic actuators of a control are located in use beneath this uncoated zone 18. As in the previous embodiment, there is another annular zone 8' with radial stripes of coating 20, but in this embodiment they are segment-shaped i.e. they taper towards the centre of the plate. The second area of additional hydrophobic coating extends from the very outer edge of the planar heater surface and up a rising wall 7 from which the peripheral channel 4 extends.

In use of the heater bubbles will preferentially form on the non-wetted surface where the hydrophobic coating is provided. Bubbles formed on the coating array in the annular zone 8' will tend to grow to a size limited by the width of the segments 20. Since the segments 20 widen towards the outside of the heater surface 6, bubbles will tend to move outwardly as they try to expand and will therefore migrate towards the rising wall 7. There will be a tendency for bubbles to migrate up the wall and detach when they reach the top. Thus the migration and detachment of bubbles is encouraged before they grow too large, and the noise levels produced by the heater will be reduced. Such migration is enhanced by the convection currents which exist in the water as it is being heated. Detachment of the bubbles may be enhanced by adding a lip at the top of the wall 7.

Furthermore the pattern of coating on the heater surface 6 produces a visually appealing pattern of bubbles detaching into the liquid in the vessel. The coating arrays shown in Figs. 1-4 will produce spaced apart, radially extending streams of bubbles moving up through the liquid being heated. Such bubble streams can be illuminated by a light source in the vessel to produce an attractive effect.

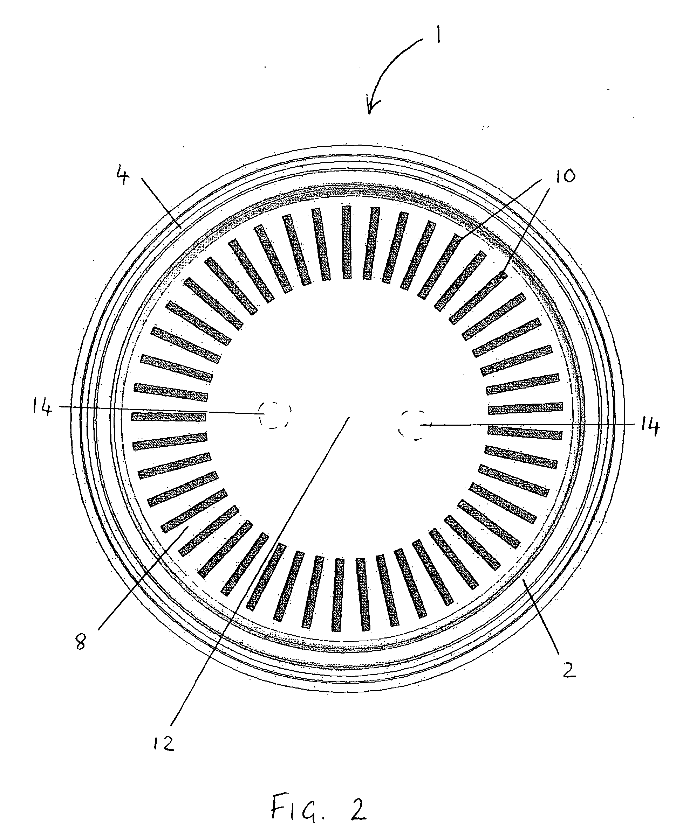

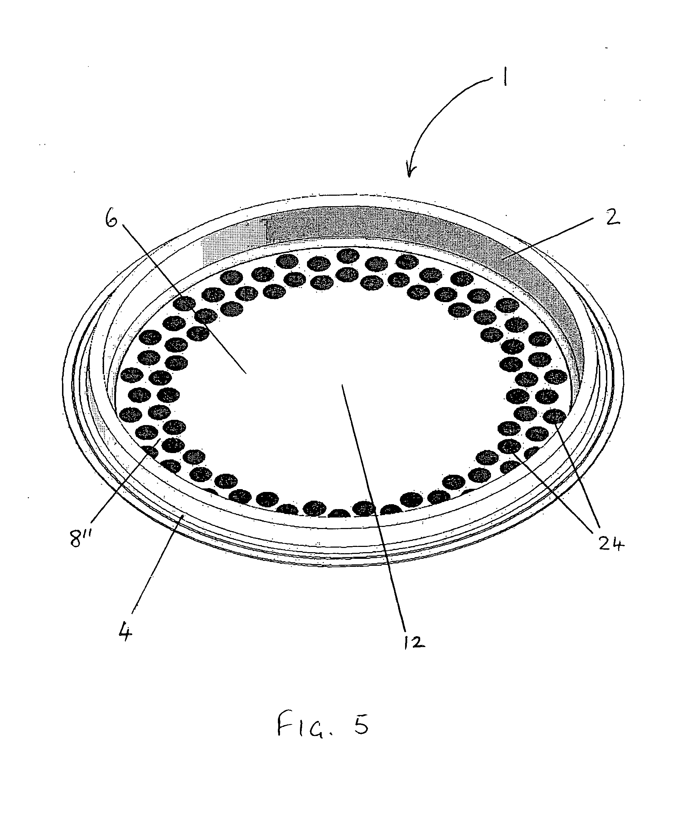

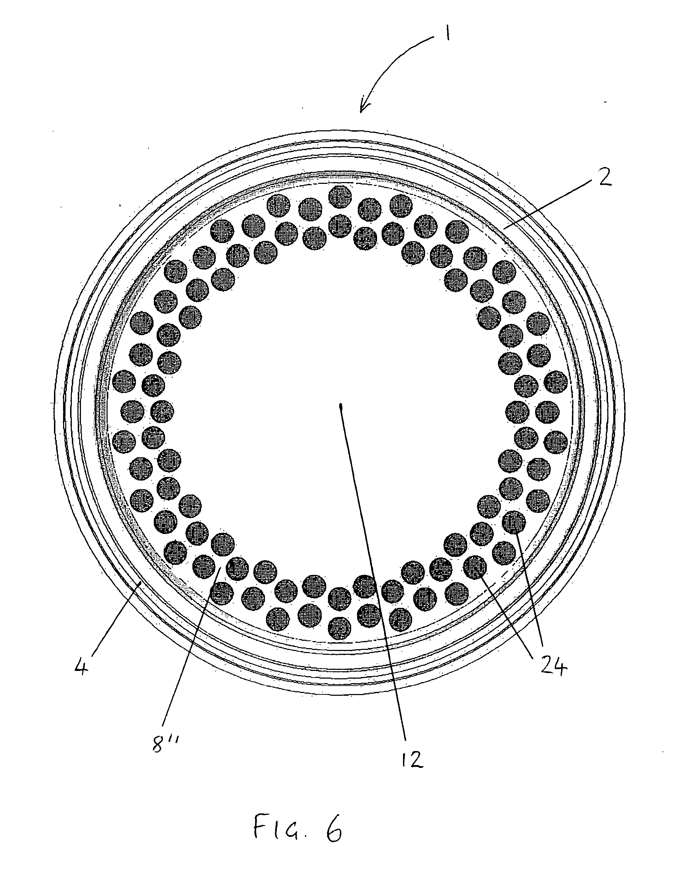

An alternative embodiment, somewhat similar to that of Figs. 1 and 2, is shown in Figs. 5 and 6. The liquid facing surface 6 of the heater plate 2 is here provided with an array of circular patches or dots 24 of hydrophobic coating formed in a generally annular zone 8'' around the outside of the flat part of the plate 2.

In the centre of the plate 2 there is a generally circular zone 12 on the surface which is free of any coating. The bimetallic actuators of a control are designed to contact the heater underneath the uncoated zone 12 as previously described. This coating array produces spaced apart columns of rising bubbles in the liquid being heated.

Figure 8 shows schematically a stripe 26 of hydrophobic coating having a peaked thickness profile which may be used in conjunction with any of the previous embodiments. Such a profile can be engineered when the coating is applied by controlling the amount of flattening agent in the coating material so as to control its tendency to slump and spread out when it is applied wet to the heater surface, e.g. by spray coating. Fig. 8 exaggerates the effect for clarity. In practice the height is only likely to vary by of the order of 10%. It will be apparent that as a bubble forms over the coated surface and expands, the change in surface contact area resulting from the rising profile of the coating will limit the growth of the bubble. Moreover bubbles will tend to migrate up the rising surface of the coating and detach from the peak.

The profiled coating will further have an effect on the local convection currents in the liquid being heated. Heated liquid will have a tendency to rise up around the coating peak, encouraging the migration of bubbles up the rising coating surface and the detachment of bubbles from the coating peak.

Although the peaked profile shown in Figure 8 is exaggerated for illustrative purposes, the resulting effects will be as described.

It will be appreciated by those skilled in the art that the above described embodiments are merely examples of possible applications of the principles of the invention and there are many further possibilities. For example, the discontinuous hydrophobic coating need not be formed in arrays as shown. The coating has been shown in arrays which form a generally annular zone positioned on the heater surface directly over the heating element so as to allow optimal noise reduction but entail minimal material cost. However the hydrophobic coating may be formed in a zone extending over a substantially larger proportion of the heater surface than shown. It may be that only a relatively small zone on the surface over the thermal sensors is free of the coating.

It will also be appreciated that although coating has been shown as forming uniformly shaped regions in a regularly spaced array, the coating may be applied in any regular or irregular fashion, and with non-uniform regions, as long as it is discontinuous in some way. For example, the coating could be splattered across the heater surface.

Additives may be used to give an irregular surface pattern to the coating such as those known in paints to give a "hammered" effect. Such an effect will also discourage the growth of bubbles and encourage their detachment.

Although the hydrophobic coating is preferably silicon-based, this is not essential.

The invention has been described with reference to embodiments employing sheathed elements but is equally applicable to thick film heaters.

## Claims

1. An electric liquid heater comprising a liquid facing surface having thereon first and second discrete zones, said first zone comprising a discontinuous hydrophobic coating and said second zone being substantially free of said coating.

2. A heater as claimed in claim 1 wherein a second, different coating is applied on the heater surface.

3. A heater as claimed in claim 2 wherein a layer of said second coating is applied before the hydrophobic coating is applied such that it remains exposed in those areas where the hydrophobic coating is not present.

4. A heater as claimed in claim 2 or 3 wherein said second coating discourages the adhesion of scale.

5. A heater as claimed in any preceding claim wherein said first zone corresponds generally to the extent of a heating element attached to the heater.

6. A heater as claimed in any preceding claim wherein the first zone comprises an annulus on the liquid facing surface extending around the periphery of the heated portion of the heater surface.

7. A heater as claimed in claim 6 wherein said annulus comprises about one third of the heater surface.

8. A heater as claimed in any preceding claim wherein at least a portion of the second zone of the liquid facing surface is directly above a thermal sensor associated with the heater.

9. A heater as claimed in any preceding claim wherein the second zone comprises a circular or annular region of the heater.

10. A heater as claimed in any preceding claim wherein they hydrophobic coating comprises an array of spaced apart regions.

11. A heater as claimed in any preceding claim wherein the hydrophobic coating comprises an array of generally circular regions on the surface.

12. A heater as claimed in any of claims 1-10 wherein the hydrophobic coating comprises an array of radially extending strips.

13. A heater as claimed in claim 10, 11 or 12 wherein the size of regions of the array is such that bubbles formed on the coating are limited to a size of 10 mm or less, preferably 1-3 mm.

14. A heater as claimed in any preceding claim wherein the liquid facing surface of the heater has a third discrete zone comprising a continuous hydrophobic coating.

15. A heater as claimed in any preceding claim wherein said continuous or discontinuous hydrophobic coating is provided on a rising portion of the heater surface.

16. A heater as claimed in any preceding claim wherein the hydrophobic coating has a thickness profile encouraging the preferential detachment of bubbles formed thereon at predetermined parts of the profile.

17. A heater as claimed in any preceding claim wherein they hydrophobic coating has a water contact angle between 80° and 170°, preferably above 100°.

18. A heater as claimed in any preceding claim wherein the hydrophobic coating is silicon based, preferably pure silicon resin.

19. A heater as claimed in any preceding claim wherein the hydrophobic coating is able to withstand temperatures up to 400 °C without degrading.

20. A heater as claimed in any preceding claim wherein the hydrophobic coating comprises a hydrophobic silica additive.

21. An electric liquid heater having a profile including a rising portion, wherein said rising portion has a hydrophobic coating on its surface and wherein elsewhere on the surface of the heater there is provided a non-uniform noise reduction coating.

22. An electric liquid heater comprising a hydrophobic coating applied to its liquid facing surface with a thickness profile encouraging the preferential detachment of bubbles formed thereon at predetermined parts of the profile.

23. An electric liquid heater comprising a hydrophobic coating pattern applied to its liquid facing surface for generating, in use, convection currents in the liquid enhancing the detachment of bubbles formed thereon.

24. An electric liquid heater comprising a coating applied to its liquid facing surface, the coating comprising a physical surface structure which substantially prevents wetting thereof by water or water containing detergents.

25. A method of applying a hydrophobic coating to an electric water heater so as to reduce the levels of noise generated during heating comprising applying said hydrophobic coating discontinuously on a first zone of the heater surface and maintaining a second zone of the heater surface substantially free of said coating.

26. A water heating vessel incorporating a heater as claimed in any of claims 1-24.
